# EUROPÄISCHE PATENTSCHRIFT

(11) **EP 0 641 908 B1**
(45) Veröffentlichungstag und Bekanntmachung des Hinweises auf die Patenterteilung: **16.12.1998**
(21) Anmeldenummer: 94112436.4
(22) Anmeldetag: 09.08.1994
(51) Int. Cl.: E05B 67/00

(54) **Kabelschloss, insbesondere für Zweiradfahrzeuge**
Cable lock, in particular for two-wheel vehicles
Serrure de câble, en particulier pour véhicules à deux roues

(30) Priorität: 08.09.1993 DE 9313594 U
(43) Veröffentlichungstag der Anmeldung: 08.03.1995
(73) Patentinhaber: Aug. Winkhaus GmbH & Co. KG, D-48291 Telgte (DE)
(72) Erfinder: Kortenbrede, Ludger, D-48291 Telgte (DE)
(74) Vertreter: Prechtel, Jörg, Dipl.-Phys. Dr.

(56) Entgegenhaltungen:
- DE-A- 2 600 074
- DE-A- 3 115 534
- US-A- 4 075 878

## Beschreibung

Die Erfindung betrifft ein Kabelschloß, insbesondere für Zweiradfahrzeuge, umfassend
- ein Schloßteil mit einem Schloßgehäuse und einem Schloß, insbesondere Zylinderschloß, innerhalb des Schloßgehäuses,
- ein langgestrecktes, flexibles Kabelelement, dessen eines Kabelende am Schloßteil um die Kabelachse drehbar befestigt ist und dessen anderes Kabelende mit einem Schließkopf versehen ist, zum wahlweisen Einsetzen in eine Aufnahmeöffnung des Schloßteils und Verriegeln in der Aufnahmeöffnung mittels des Schlosses.

Ein Kabelschloß dieser Art ist bekannt (US-4075878-A; DE-2600074-A1). Aufgrund der freien Drehbarkeit des Kabelelements gegenüber dem Schoßteil ergibt sich eine vereinfachte Handhabung des Kabelschlosses, vor allem deshalb, weil beim Zusammenstecken von Schließkopf und Schloßteil vom flexiblen Kabelelement auf das Schloßteil einwirkende Torsionskräfte von vornherein vermieden werden. Vor allem bei Einsatz eines flexiblen Kabelelements in Form eines Spiralkabels muß beim Anschließen des Zweiradfahrzeugs, beispielsweise an einen Masten, das Kabel aus seiner spiraligen normalen Lage herausgestreckt und um den Masten gelegt werden, mit der Folge, daß das Schloßgehäuse eine Lage einnehmen möchte, die im allgemeinen nicht der Sollage entspricht, in der die Aufnahmeöffnung dem Schließkopf gegenüber liegt. Das Schloßteil muß daher im allgemeinen unter Überwindung entsprechender Torsionskräfte des Kabelelements in die entsprechende Lage gedreht werden, um dann den Schließkopf in das Schloßteil einstecken zu können. Diese Torsionskräfte entfallen bei der eingangs angesprochenen drehbaren Anlagerung des einen Kabelendes am Schloßteil.

Der Erfindung liegt das technische Problem zugrunde, die Handhabung des Kabelschlosses zu verbessern. Hierzu wird vorgeschlagen, daß das Schloßteil mit einer Kabelhülse versehen ist, die einen Endabschnitt des Kabelelements im Bereich des am Schloßteil drehbar befestigten einen Kabelendes umgreift und die am Schloßteil um die Kabelachse drehbar gelagert ist, wobei der Außenumfang der Kabelhülse im wesentlichen stufenlos in den Außenumfang des Schloßgehäuses übergeht, und daß die Kabelhülse in Richtung weg vom Schloßgehäuse einen im wesentlichen kontinuierlich abnehmenden Außendurchmesser aufweist. Hierdurch erhält man einen weitgehend glatten Übergang zwischen dem Kabel mit relativ geringen Durchmesser und dem Schloßgehäuse mit relativ großem Durchmesser. Dies ergibt gefälliges Aussehen sowie reduzierte Verschmutzungsgefahr aufgrund der Vermeidung von Vorsprüngen, insbesondere dann, wenn die Kabelhülse im Bereich ihres vom Schloßgehäuse abgewandten Endes zum Kabelelement hin flach ausläuft. Das Kabelschloß im Bereich des Schloßteils liegt angenehm in der Hand. Auch ergibt sich in Verbindung mit einem Schloßhalter eine besonders vereinfachte Handhabung, und zwar deshalb, weil ein Hängenbleiben des Schloßgehäuses beim Einführen in den Schloßhalter praktisch ausgeschlossen ist.

Die lediglich im Endabschnitt des Kabelelements vorgesehene Kabelhülse stabilisiert das am Schloßteil festgelegte Kabel. Ein zu starkes Abknicken des Kabels im Bereich des Schloßteils wird durch die Hülse zuverlässig vermieden. Ein derartiges Abknicken kann die freie Drehbarkeit des Kabelendes am Schloßteil beeinträchtigen. Ein zu starkes Abknicken kann unter Umständen auch zu einer bleibenden Verformung mit entsprechender Beeinträchtigung des Aussehens des Kabelschlosses und unter Umständen sogar zu einer Beschädigung des Kabels führen. Die den Endabschnitt des Kabelelements umgreifende Kabelhülse beeinträchtigt die freie Drehbarkeit des Kabels nicht, da die Kabelhülse am Schloßteil um die Kabelachse drehbar gelagert ist und somit die Drehbewegung des Kabels mitvollziehen kann.

In einer besonders bevorzugten Weiterbildung der Erfindung ist vorgesehen, daß die Kabelhülse am Schloßgehäuse drehbar gelagert ist und daß das eine Kabelende am Schloß, insbesondere Zylinderschloß, drehbar gelagert ist. Für die erforderliche Ausreiß-Festigkeit sorgt die Lagerung des Kabelendes am Schloß, welches im allgemeinen ein besonders stabiles Teil, insbesondere Metallteil ist. Die Kabelhülse dagegen braucht nicht gegen Ausreißversuche (Zug in Richtung der Kabelachse) gesichert sein, so daß es genügt, die Kabelhülse am mechanisch weniger stabil ausgebildeten Schloßgehäuse, insbesondere Kunststoff-Schloßgehäuse, drehbar zu lagern.

Eine herstellungstechnisch besonders einfache sowie montagefreundliche Ausgestaltung der Drehlagerung besteht darin, daß die Kabelhülse mit dem Schloßgehäuse verklipst ist.

Eine ausreichende Führungsfunktion bei nicht allzu großer Gesamtlänge von Schloßgehäuse und Kabelhülse ist im allgemeinen dann gesichert, wenn, wie erfindungsgemäß vorgeschlagen wird, die Länge parallel zur Drehachse des aus dem Schloßgehäuse vorstehenden Teils der Kabelhülse im Bereich des 0,3- bis lfachen, vorzugsweise des 0,4- bis 0,8fachen der entsprechenden Länge des Schloßgehäuses liegt.

Insbesondere bei Einsatz eines flexiblen Kabelelements in Form eines Spiralkabels wird vorgeschlagen, daß die Kabelhülse dem Verlauf des Kabelelements im spannungsfreien Zustand folgend gebogen ist.

Aufgrund dieser Maßnahme wird das Kabelende durch die Kabelhülse in seiner "natürlichen" Lage gehalten, so daß weder auf das Kabel noch auf die Kabelhülse Biegemomente einwirken, die eine Verdrehung von Kabel und Kabelhülse gegenüber dem Schloßteil erschweren würden. Auch erhält man ein besonders gefälliges Aussehen.

In einer alternativen Ausführungsform ist vorgesehen, daß die Kabelhülse im wesentlichen kegelstumpfförmig ist. Diese Ausführungsform ist vor allem für Kabelelemente in Form einer einfachen Kabelschleife vorgesehen. Dabei kann die Kegelstumpfform der Kabelhülse eine Fortsetzung der Kegelform des Schloßgehäuses sein.

Die Kabelhülse kann mit dem Kabelelement einstückig ausgebildet sein, insbesondere könnte die Kabelhülse an das Kabelelement anspritzt sein. Bevorzugt ist jedoch vorgesehen, daß die Kabelhülse und das Kabelelement gesonderte Teile bilden. Dies reduziert die Herstellungskosten, da ein einfaches Kabelelement von der Rolle verwendet werden kann, an welches lediglich die entsprechenden metallischen Endstücke anzubringen sind, nämlich der Schließkopf am anderen Kabelende sowie ein Drehlagerteil am einen Kabelende. Die Kabelhülse selbst kann kostengünstig aus Kunststoffmaterial hergestellt werden.

Um ein Eindringen von Schmutz und Feuchtigkeit in die Hülse und über diese in das Schloßgehäuse zu verhindern, wird vorgeschlagen, daß die Kabelhülse den Endabschnitt des Kabelelements im wesentlichen abdichtend umgreift. Hierdurch werden auch Klappergeräusche ausgeschlossen. Der sich ergebende Reibungskraftschluß zwischen Endabschnitt und Kabelhülse beeinträchtigt die freie Drehbarkeit des Kabels gegenüber dem Schloßteil nicht, da ja, wie ausgeführt, die Kabelhülse selbst am Schloßteil drehbar gelagert ist.

Gemäß einer Weiterbildung der Erfindung wird vorgeschlagen, daß das Schloßgehäuse zweiteilig ist mit einer zur Drehachse des Kabels im Schloßteil im wesentlichen parallelen Teilungsebene. Dies erleichtert die Anbringung der Kabelhülse am Schloßgehäuse, da hierzu die Kabelhülse in eines der beiden Schloßgehäuseteile einzulegen und dann das andere Schloßgehäuseteil zu montieren ist.

Eine andere Art der Montage wird dadurch bereitgestellt, daß die Kabelhülse mit radial nach innen federnden Rasthaken versehen ist, die den Rand einer Kreisöffnung des Schloßgehäuses hintergreifen. Die Kabelhülse kann dann dementsprechend mit den Rasthaken voraus in die Kreisöffnung eingeschoben und dort verrastet werden unter Bildung des Drehlagers.

Um das erfindungsgemässe Kabelschloß in einfacher Weise an einem Träger, insbesondere einem Fahrradrahmen anzubringen, wird vorgeschlagen, daß es mit einem das Schloßgehäuse umgreifenden Schloßhalter versehen ist und daß der Schloßhalter zur Fixierung des Schloßgehäuses mit einer mit der Aufnahmeöffnung fluchtenden Durchstecköffnung für den Schließkopf versehen ist.

Bei den eingangs aufgeführten bekannten Kabelschlössern (US-4075878-A; DE-2600074-A1) ist das eine Kabelende am Schloßgehäuse drehbar gelagert. Um höheren Auszugskräften standhalten zu können, muß das Schloßgehäuse aus entsprechend stabilem Material gefertigt sein. Das Schloß innerhalb des Schloßgehäuses wird von einer Verriegelungseinrichtung für den Schließkopf und einem hierzu separaten Zylinderschloß aus Zylindergehäuse und im Zylindergehäuse drehbar gelagerten Schließzylinder gebildet.

Dem gegen über wird vorgeschlagen, daß das Kabelende an einem Zylindergehäuse des Zylinderschlosses drehbar gelagert ist, welches Zylindergehäuse sowohl eine Aufnahmeöffnung mit Verriegelungseinrichtung für den Schließkopf aufweist als auch eine Drehlageröffnung für einen Schließzylinder.

Aufgrund der drehbaren, jedoch axial unverschiebbaren Lagerung des einen Kabelendes am Zylindergehäuse werden vom entsprechend stabil ausgebildeten Zylindergehäuse (in der Regel Metallgehäuse) Kabel-Auszugskräfte vom Zylindergehäuse aufgenommen und, über die Verriegelungseinrichtung innerhalb des Zylindergehäuses, auf den Schließkopf am anderen Kabelende weitergeleitet, so daß der Kraftweg über Kabelelement und Schloßteil geschlossen ist, trotz Drehlagerung des einen Kabelendes. Da das Zylindergehäuse zudem den Schließzylinder unmittelbar aufnimmt, entfällt das bei dem bekannten Kabelschloß erforderliche gesonderte Zylindergehäuse des Zylinderschlosses. Der Kabelschloßaufbau ist dementsprechend vereinfacht mit hieraus resultierenden Fertigungsvorteilen des Massenprodukts Kabelschloß. Gleichzeitig ist für zuverlässige Funktion, insbesondere hohe Aufbruchsicherheit gesorgt.

Die Erfindung wird im folgenden an bevorzugten Ausführungsbeispielen anhand der Zeichnung erläutert.

Es zeigt:
Fig. 1 eine perspektivische Gesamtansicht einer ersten Ausführungsform des erfindungsgemäßen Kabelschlosses;
Fig. 2 eine perspektivische Ansicht des Kabelschlosses gemäß Fig. 1 angebracht an einem Fahrradrahmenabschnitt mittels eines Halters;
Fig. 2A eine weitere Ansicht lediglich des Halters (Blickrichtung IIA in Fig. 2);
Fig. 3 einen Längsschnitt durch ein Schloßteil des Kabelschlosses gemäß Fig. 1 und 2 (Schnitt nach Linie III in Fig. 5);
Fig. 4 einen weiteren Längsschnitt senkrecht zur Schnittebene gemäß Fig. 3 (Schnitt nach Linie IV in Fig. 5);
Fig. 5 einen Querschnitt des Schloßteils gemäß Fig. 3 und 4 (Schnitt nach Linie V in Fig. 4);
Fig. 6 einen weiteren Querschnitt (Schnitt nach Linie VI in Fig. 3);
Fig. 7 einen Schnitt entsprechend Fig. 3 einer zweiten Ausführungsform des erfindungsgemäßen Kabelschlosses;
Fig. 8 einen Schnitt ensprechend Fig. 4 der zweiten Ausführungsform;
Fig. 9 eine Rückansicht einer Kabelhülse als Teil des Schloßteils (Blickrichtung IX in Fig. 7);
Fig. 10 einen Schnitt entsprechend Fig. 6 der zweiten Ausführungsform.

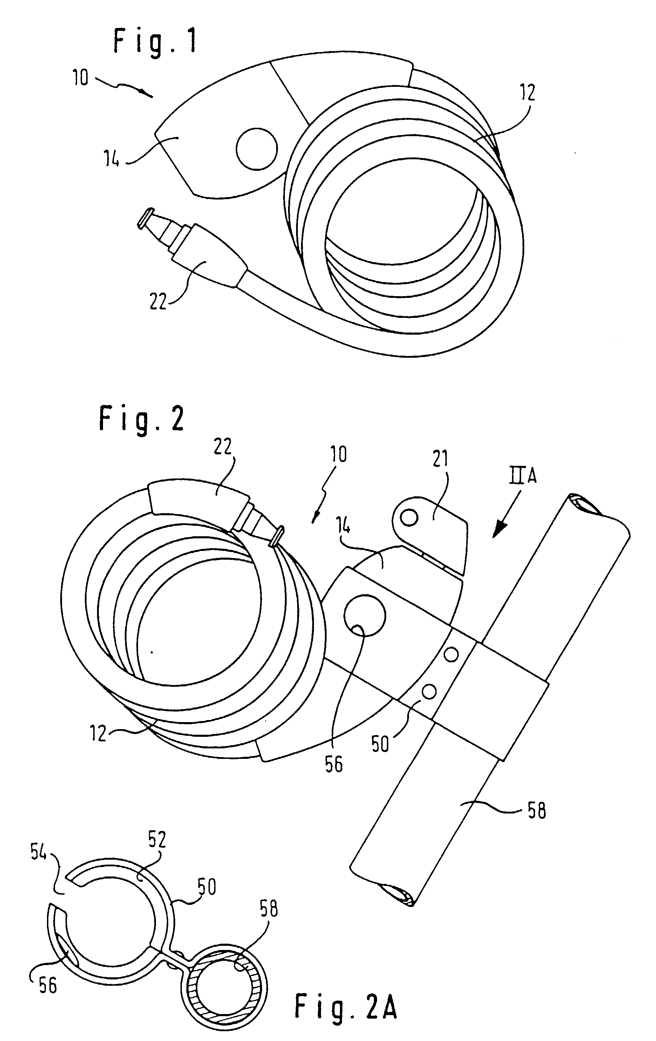

Das Kabelschloß 10 gemäß Fig. 1 bis 6 ist mit Vorteil als Fahrradschloß einsetzbar. Hierbei kann das Kabelschloß sowohl zur Blockierung eines der beiden Räder verwendet werden oder, sofern eine entsprechende Anschließmöglichkeit besteht, auch an ein ortsfestes Teil, wie z.B. einen Laternenmasten, angeschlossen werden, indem das Schloß sowohl um den Masten als auch um wesentliche Teile des Fahrrads, insbesondere den Rahmen, in einer geschlossenen Schleife gelegt wird. Das Kabelelement 12 des Kabelschlosses kann hierzu von einem Spiralkabel gebildet sein, wie dieses in den Fig. 1 und 2 erkennbar ist. Dieses Spiralkabel ermöglicht bei kompakter Bauform in nicht angeschlossenem Zustand eine relativ große Kabellänge im ausgezogenen Zustand. Anstelle des Spiralkabels kann jedoch auch ein einfach gebogenes Kabel entsprechender Länge zum Einsatz kommen, wenn auch die freie Drehbarkeit eines Schloßteils 14 an einem der beiden Enden des Kabelelementes 12 relativ zum Kabelelement 12, wie diese in den Ausführungsbeispielen vorgesehen ist, besonders vorteilhaft in Verbindung mit einem Spiralkabel ist. Das Kabelschloss wird bevorzugt als Fahrradschloß eingesetzt, da hier die einfache Handhabung und das gefällige Aussehen besonders zum Tragen kommen; andere Anwendungen zum Verschließen oder Anschließen tragbarer Gegenstände, wie z.B. Leitern oder dergleichen, sind ebenfalls denkbar.

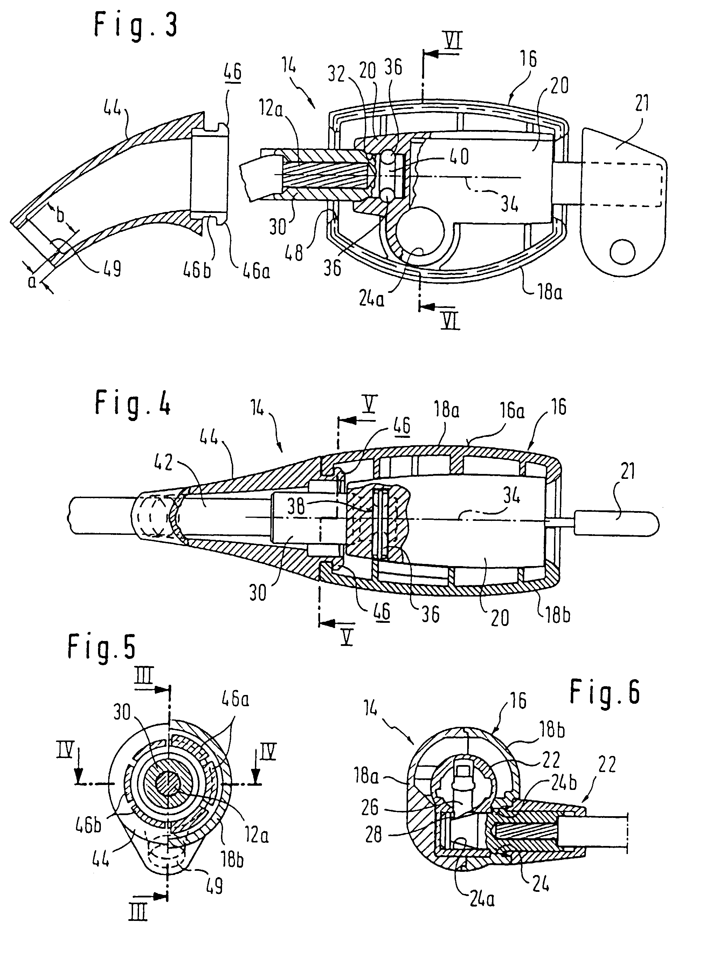

Der generelle Aufbau des Schloßteils 14 geht aus den Fig. 3 bis 6 hervor. Innerhalb eines Schloßgehäuses 16 aus zwei Gehäusehalbschalen 18a und 18b befindet sich das eigentliche Schloß, welches in dem dargestellten Ausführungsbeispiel von einem Zylinderschloß 20 gebildet wird. Es sind auch andere Schloßarten denkbar, wie z.B. ein Kombinationsschloß mit mehreren Zuhalteringen, die bei richtiger Einstellung das Schloß öffnen. Das dargestellte Zylinderschloß 20 ist mit Hilfe eines Schlüssels bedienbar.

Das Kabelschloß 10 wird dadurch geschlossen, indem ein am freien Ende des Kabelelements 12 vorgesehener Schließkopf 22 in eine Aufnahmeöffnung 24 des Schloßteils 14 eingeschoben und dort mit Hilfe des Zylinderschlosses 20 verriegelt wird. Die Aufnahmeöffnung 24 wird hierbei von einer Sacklochöffnung 24a im Zylinderschloß 20 gebildet sowie von einer mit dieser Öffnung fluchtenden Durchgangsöffnung 24b in der Halbschale 18b des Schloßgehäuses 16. Innerhalb der Öffnung 24a wird der Schließkopf 22 dadurch verriegelt, daß ein federvorgespannter Sperrstift 26 in eine Umfangsnut 28 des Schließkopfes eingreift (siehe Fig. 6). Der Sperrstift 26 wiederum kann durch Einstecken und Verdrehen des passenden Schlüssels 21 aus der Umfangsnut 28 gezogen werden, so daß der Schließkopf 22 freikommt.

Während das mit dem Schließkopf 22 versehene Ende des Kabels mit dem Schloßteil 14 sperrend verbindbar und von diesem wieder lösbar ist, besteht eine ständige Verbindung zwischen dem anderen Ende des Kabelelements 12 und dem Schloßteil 14. Das andere Ende ist hierzu mit einem Endstück 30 versehen, welches auf das Ende des eigentlichen mehrlitzigen Kabels 12a eingesteckt und dort bleibend fixiert ist. Das Endstück 30 ist in eine Sacklochöffnung 32 des Zylinderschlosses 20 eingesteckt und dort gegen ein Herausziehen gesichert mit der Möglichkeit einer gegenseitigen Verdrehung von Kabelelement 12 und Schloßteil 14 um die Kabelachse 34. Diese Art der Befestigung mit Drehlagerbildung ist im dargestellten Ausführungsbeispiel dadurch realisiert, daß zwei einander gegenüberliegende und zueinander parallele Sperrstifte 36 in entsprechende Sacklochbohrungen 38 des Zylinderschlosses 20 eingeschlagen sind, die in einem mittleren Längenbereich jeweils in eine im Querschnitt an den Bolzenumfang angepaßte Umfangsnut 40 des Endstücks 30 eingreifen (siehe Fig. 3 und 4).

Der aus dem Schloßgehäuse 16 herausragende Abschnitt des Endstücks 30 sowie ein sich hieran anschließender Endabschnitt 42 des eigentlichen Kabels 12a wird von einer Kabelhülse 44 entsprechender Länge umgriffen. Diese ist dem spiraligen Verlauf des Kabelelements 12 folgend gebogen, wie aus den Fig. 1 und 3 hervorgeht. Die Kabelhülse 44 dreht sich mit dem Kabelelement 12, wenn dieses relativ zum Schloßteil 14 verdreht wird. Hierzu ist die Kabelhülse 44 am Schloßteil 14 um die genannte Achse 34 drehbar gelagert. Die Drehlagerung erfolgt gesondert von der des Endstücks 30, und zwar am Schloßgehäuse 16. Hierzu ist die Kabelhülse 44 mit beispielsweise sechs auf einen Kreisumfang verteilten Rasthaken 46 versehen, die in den Fig. 3 bis 5 erkennbar sind. Diese hintergreifen den Rand einer zu Achse 34 zentrischen Kreisöffnung 48 des Schloßgehäuses 16. Die radial nach außen abstehenden Köpfe 46a der Rasthaken sind in Fig. 3 und 4 an ihrer rechten Seite jeweils mit einer Einweis-Abschrägung versehen, der eine entsprechende Einweis-Abschrägung des Randes der Kreisöffnung 48 des Schloßgehäuses 16 entspricht. Beim Zusammenschieben von Kabelhülse 44 und Schloßgehäuse 16 in Richtung parallel zur Achse 34 werden die Rasthaken 46 daher keilartig in Richtung radial nach innen gebogen, um dann innerhalb des Schloßgehäuses 16 radial nach außen zurückzufedern und so eine Auszugssperre zu bilden. Die sich in Fig. 3 nach links an die Köpfe 46a anschließenden Halsabschnitte 46b der Rasthaken 46 bilden mit ihrer von der Achse 34 abgewandten Seite Drehlagerflächen, die am Rand der Kreisöffnung 48 anliegen und so das Drehlager mit der Achse 34 definieren.

Wie bereits erwähnt, ist das Schloßgehäuse 16 aus zwei Halbschalen 18a und 18b gebildet. Es besteht daher die Möglichkeit, Schloßgehäuse 16 und Kabelhülse 44 auch dadurch zusammenzumontieren, daß man die Kabelhülse 44 in eine der beiden Halbschalen 18a einlegt und dann die andere Halbschale auflegt und befestigt (durch Verkleben, Verklipsen, Ultraschall-Verschweißen, u.ä.). Anstelle der einzelnen Rasthaken 46 kann dann auch ein in Umfangsrichtung durchgehender ringförmiger Endabschnitt verwendet werden mit einem Querschnitt entsprechend dem Querschnitt der Rasthaken 46 in Fig. 4.

Wie den Figuren zu entnehmen ist, schließt die Kabelhülse 44 mit ihrem in Fig. 3 und 4 rechten Ende im wesentlichen stufenlos und spaltfrei mit der Außenumfangsfläche 16a des Schloßteils 16 ab. Zum anderen Ende hin verringert sich der Außendurchmesser der Kabelhülse 44 kontinuierlich bis zu einer relativ geringen Restwandstärke a im Bereich des etwa 0,1- bis 0,3fachen des Durchmessers des Kabelelements 12, der wiederum dem Durchmesser b der Eintrittsöffnung 49 am in den Fig. 3 und 4 linken Ende der Kabelhülse 44 entspricht. Das Eindringen von Feuchtigkeit und Schmutz in das Innere der Kabelhülse 44 und somit auch in das Innere des Schloßgehäuses 16 wird durch diesen zumindest einigermaßen dichten Abschluß zwischen Kabelelement 12 und Hülse 44 im Bereich der Öffnung 49 verhindert.

Es ergibt sich demzufolge ein glatter und im wesentlichen vorsprungsfreier Übergang vom Schloßteil 14 zum Kabelelement 12. Man erhält ein gefälliges Aussehen bei reduzierter Verschmutzungsgefahr. Das Schloßteil 14 samt Kabelhülse 44 liegen angenehm in der Hand ("Handschmeichler"). In Verbindung mit dem in Fig. 2 angedeuteten Schloßhalter 50 ergibt sich eine vereinfachte Handhabung, und zwar deshalb, weil ein Hängenbleiben des Schloßteils 14 beim Einführen in den Schloßhalter 50 praktisch ausgeschlossen ist.

Der Schloßhalter 50 kann gemäß den Fig. 2 und 2A ähnlich einer Rohrschelle ausgebildet sein mit einer an die Ei-ähnliche Form des Schloßteils 14 angepaßten Aufnahmeöffnung 52, die sich in Fig. 2 nach unten hin verjüngt, so daß das Schloßteil 14 von oben her bis zum Pass-Sitz eingesteckt werden kann. Ein in die Aufnahmeöffnung 52 radial einmündender Schlitz 54 erlaubt es, das Kabel 12 in radialer Richtung in den Halter 50 bzw. aus dem Halter 50 zu bewegen, so daß ein Einfädeln des Kabelelements 12 (Spiralkabel) zum Durchtritt durch die Öffnung 52 bei der Anbringung des Kabelschlosses 10 am Halter 50 entfallen kann und dementsprechend auch beim Lösen vom Halter 50.

Die Fixierung des Schloßteils 14 im Halter 50 erfolgt dadurch, daß der Schließkopf 22 durch eine seitliche Durchstecköffnung 56 des Halters 50 hindurch in die mit dieser Durchstecköffnung fluchtende Aufnahmeöffnung 24 des Schloßteils 14 gesteckt wird bis zur Verriegelung durch den federvorgespannten Stift 26 (Fig. 6). Zum Lösen des Kabelschlosses 10 vom Halter 50 muß dementsprechend zuerst der Sperrstift 26 durch entsprechende Betätigung des Schlüssels 21 zurückgezogen werden, so daß der Schließkopf 22 aus dem Schloßteil 14 herausgezogen werden kann und das Schloßteil 14 aus dem Halter 50 entfernt werden kann mit Durchtritt des Kabelelements 12 durch den besagten Schlitz 54.

Die Befestigung des Halters 50 am entsprechenden Träger, hier an einem Rahmenrohr 58 eines Fahrrads, erfolgt in üblicher Weise durch Verschrauben, Vernieten, Verschweißen oder dergleichen.

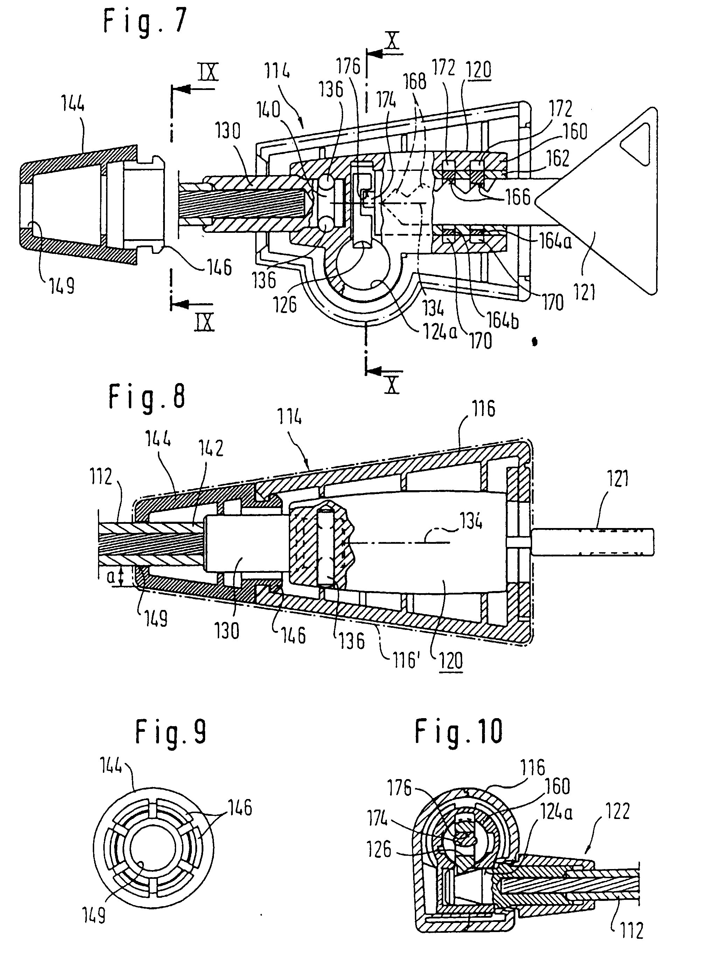

In den Fig. 7 bis 10 ist eine zweite Ausführungsform des erfindungsgemäßen Kabelschlosses dargestellt. Bauelemente, die ihrer prinzipiellen Funktion nach solchen in den Fig. 1 bis 6 entsprechen, sind mit denselben Bezugsziffern, jedoch jeweils vermehrt um die Zahl 100 versehen. Im folgenden wird lediglich auf die Unterschiede zwischen den beiden Ausführungsformen eingegangen. Was den Grundaufbau sowie die Grundfunktion der zweiten Ausführungsform betrifft, so wird hiermit ausdrücklich auf die Beschreibung der ersten Ausführungsform Bezug genommen.

Die zweite Ausführungsform weist ebenfalls eine dementsprechend mit 144 bezeichnete Kabelhülse auf, die den Endabschnitt 142 des Kabelelements 112 umgreift und die mit dem zweischaligen Schloßgehäuse 116 über Rasthaken 146 verklipst ist. Der Schließkopf 122 ist in der Aufnahmenöffnung 124 mittels des Sperrstiftes 136 sperrend festlegbar. Der Sperrstift 136 ist über das Zylinderschloß 120 samt Schlüssel 121 betätigbar.

Das Endstück 130 am anderen Ende des Kabelelements 112 ist wiederum am Zylinderschloß 120 um die Achse 134 drehbar, jedoch axial unverschieblich gelagert. Die gesonderte Drehlagerung der Kabelhülse 144 erfolgt in gleicher Weise über die Rasthaken 146 am Schloßgehäuse 116.

Bei der zweiten Ausführungsform ist die Kabelhülse 144 nicht gebogen, sondern rotationssymmetrisch zur Achse 134 ausgebildet, und zwar in Form eines geraden Kegelstumpfes, an den sich im wesentlichen spaltfrei und stufenlos das dementsprechend ebenfalls kegelstumpfförmige Schloßgehäuse 116 anschließt. Die Kabeleintrittsöffnung 149 am in den Fig. 7 und 8 linken Ende der Kabelhülse 144 schließt wiederum angenähert dicht mit dem Außenumfang des Kabelelements 112 ab, um ein Eindringen von Feuchtigkeit und Schmutz in die Kabelhülse 144 und das Schloßgehäuse 116 zu verhindern. Die Wandstärke a der Kabelhülse 144 am linken Hülsenende im Bereich der Öffnung 149 beträgt etwa das 0,5fache des Kabeldurchmessers, so daß man auch hier einen angenähert glatten und stufenfreien Übergang vom Schloßteil 114 zum Kabelelement 112 erhält.

Die Kabelhülse 144 bildet eine Gerad-Führung für das aus dem Schloßteil 114 austretende Kabelelement 112. Das in das Schloßgehäuse 116 eintretende Kabelende wird auch dann mehr oder weniger zentrisch zur Achse 134 in das dortige Drehlager hineingeführt, wenn das Kabelelement 112 außerhalb von Schloßteil 114 und Kabelhülse 144 abgebogen wird. Auf diese Weise wird eine Schwergängigkeit des Drehlagers zwischen Endstück 130 und Zylinderschloß 120 beim Kabelabbiegen verhindert. Da andererseits die Kabelhülse 144 je nach verwendetem Werkstoff auch vergleichsweise flexibel ausgebildet sein kann mit zunehmender Flexibilität aufgrund Reduzierung des Außendurchmessers zum Kabelaustrittsende hin (besonders stark ausgeprägt bei der Kabelhülse 44 der ersten Ausführungsform) erlaubt die jeweilige Hülse ein in Richtung weg vom Schloßteil 14 zunehmendes Abbiegen des Kabelelementes 12. Diese progressive Kabelkrümmung vermeidet eine Kabelknickung beim Austritt aus dem Schloßteil bzw. der Kabelhülse, so daß die Gefahr bleibender Verformungen oder sogar einer Beschädigung des Kabels bei starken Biegekräften wesentlich reduziert ist.

Zum Aufbau des Zylinderschlosses 120 sei noch ergänzt, daß dieses in herkömmlicher Weise mit Stift-Zuhaltungen ausgebildet sein kann aus im Zylinder gelagerten Oberstiften und im Zylindergehäuse gelagerten Unterstiften, wobei die Trennlinie zwischen diesen Stiften gerade mit der Trennlinie zwischen Zylinder und Gehäuse übereinstimmt, wenn der richtige Schlüssel eingesteckt ist.

Es kann jedoch auch ein wesentlich kostengünstiger herstellbares Zylinderschloß eingesetzt werden mit Schließplättchen anstelle der Stift-Zuhaltungen. Derartige Schlösser sind an sich bekannt (es sei nur beispielshalber auf die französische Patentschrift 979740 hingewiesen). In Fig. 7 ist der prinzipielle Aufbau angedeutet. Man erkennt einen in einem Zylindergehäuse 160 des Zylinderschlosses 120 um die Achse 134 drehbar gelagerten Zylinder 162. Ferner sind zwei von beispielsweise vier Schließplättchen 164a und 164b angedeutet, die im Zylinder 162 in der Zeichenebene der Fig. 7 (ist gleich Schlüsselebene des Schlüssels 121) senkrecht zur Achse 134 linear beweglich gelagert sind. Ihre jeweilige Höhenposition gemäß Fig. 7 wird durch das Profil des eingesteckten Schlüssels 121 bestimmt. Hierzu sind die Schließplättchen 164 mit einer entsprechenden Abtastfläche 166 versehen, die die jeweiligen Schlüsselzähne 168 abtasten. Die Abtastfläche 166 kann vom oberen Rand einer zentralen Schlüsseldurchtrittsöffnung der Plättchen 164 gebildet sein. Mit Hilfe nicht dargestellter Federelemente sind die Schließplättchen 164 in Fig. 7 nach unten federvorgespannt, so daß sie sich beim Einschieben des Schlüssels 121 an die Schlüsselzähne 168 anlegen.

Bei nicht eingeschobenem Schlüssel sind die Schließplättchen 164 aufgrund der Federvorspannung nach unten in entsprechende Ausnehmungen 170 des Zylindergehäuses 160 eingerückt, so daß eine Drehung des Zylinders 162 ausgeschlossen ist. Wird ein Schlüssel mit falscher Schlüsselzähnung eingeschoben, so führen zu niedrige Zähne dazu, daß die Schließplättchen 164 weiterhin mehr oder weniger weit in die unteren Ausnehmungen 170 hineinragen und so eine Zylinderdrehung ausschließen. Zu hohe Zähne dagegen führen dazu, daß die Schließplättchen 164 nach oben in obere Ausnehmungen 172 des Schloßgehäuses 160 einrücken und so ebenfalls eine Zylinderdrehung blockieren.

Das Zylindergehäuse 160 beherbergt neben dem Zylinder 162 auch das bereits näher beschriebene Drehlager für das Endstück 130 aus den beiden Sperrstiften 136, die in die Umfangsnut 140 des Endstücks 130 eingreifen, und somit neben der Drehlagerung auch für hohe Auszugs-Festigkeit des Endstücks 130 innerhalb des metallischen Zylindergehäuses 160 sorgen. Darüber hinaus beherbergt das Zylindergehäuse 160 auch die vom Sperrstift 126 innerhalb der Aufnahmeöffnung 124a gebildete Verriegelungseinrichtung für das Schließteil 122 am freien Ende des Kabelelements 112.

Der Sperrstift 126 ist in den Fig. 7 und 10 nach unten durch ein nicht dargestelltes Federelement federvorgespannt zum Eingriff in den Schließkopf 122. Durch Drehen des Zylinders 162 (bei eingeschobenem passenden Schlüssel 121) kann der Sperrstift 126 nach oben bewegt werden, um den Schließkopf 122 freizubekommen. Hierzu ist am Fig. 7 linken Ende des Zylinders 162 ein exentrisch angeordneter und/oder rotationsunsymmetrisch ausgebildeter Betätigungsvorsprung 174 vorgesehen, an dem eine nach unten gewandte Steuerfläche 176 des Sperrstiftes 126 unter der Federvorspannung anliegt (siehe auch Fig. 10). Bei Drehung des Zylinders 162 aus der in Fig. 10 dargestellten Position um 90° in der einen oder anderen Richtung wird dementsprechend der Sperrstift 126 nach oben in eine Freigabestellung bewegt.

Aufgrund dieser Konstruktion werden Auszugskräfte, die auf das eine oder andere Kabelende wirken, beispielsweise um das Kabelschloß aufzubrechen, sogleich über das metallische und dementsprechend mechanisch stabile Zylindergehäuse 160 auf das andere Kabelende weitergeleitet, so daß sich eine äußerst stabile Konfiguration ergibt. Dabei bleibt die freie Drehbarkeit des Endstücks 130 im Gehäuse erhalten, so daß entsprechende Abscher-Versuche durch Torsion des Endstücks 130 gegenüber dem Schloßteil 114 keinen Erfolg haben. Entsprechendes gilt für das andere Kabelende, da der Schließkopf 122 ebenfalls drehbar innerhalb der Verriegelungseinrichtung im Zylindergehäuse 160 gehalten ist. Diese Vorteile treten unabhängig davon auf, ob eine Kabelhülse verwendet wird oder nicht. Es ist daher auch denkbar, ein in Fig. 8 mit einer Strich-Punkt-Umrißlinie angedeutetes Schloßgehäuse 116 einzusetzen, bei welchem keine separate Kabelhülse 144 vorgesehen ist, sondern das Schloßgehäuse dementsprechend verlängert ist.

## Patentansprüche

1. Kabelschloß, insbesondere für Zweiradfahrzeuge, umfassend
- ein Schloßteil (14; 114) mit einem Schloßgehäuse (16; 116) und einem Schloß, insbesondere Zylinderschloß (20; 120), innerhalb des Schloßgehäuses (16; 116),
- ein langgestrecktes, flexibles Kabelelement (12; 112), dessen eines Kabelende am Schloßteil (14; 114) um die Kabelachse (34; 134) drehbar befestigt ist und dessen anderes Kabelende mit einem Schließkopf (22; (22; 122) versehen ist, zum wahlweisen Einsetzen in eine Aufnahmeöffnung (24; 124) des Schloßteils und Verriegeln in der Aufnahmeöffnung (24; 124) mittels des Schlosses,
dadurch gekennzeichnet,
daß das Schloßteil (14; 114) mit einer Kabelhülse (44; 144) versehen ist, die einen Endabschnitt des Kabelelements (12; 112) im Bereich des am Schloßteil (14; 114) drehbar befestigten einen Kabelendes umgreift und die am Schloßteil (14; 114) um die Kabelachse (34; 134) drehbar gelagert ist, wobei der Außenumfang der Kabelhülse (44; 144) im wesentlichen stufenlos in den Außenumfang des Schloßgehäuses (16; 116) übergeht und daß die Kabelhülse (44; 144) in Richtung weg vom Schloßgehäuse (16; 116) einen im wesentlichen kontinuierlich abnehmenden Außendurchmesser aufweist.

2. Kabelschloß anch Anspruch 1, dadurch gekennzeichnet, daß die Kabelhülse (44; 144) im Bereich ihres vom Schloßgehäuse (16; 116) abgewandten Endes zum Kabelelement hin flach ausläuft.

3. Kabelschloß nach Anspruch 1 oder 2, dadurch gekennzeichnet, daß die Kabelhülse (44; 144) am Schloßgehäuse(16; 116) drehbar gelagert ist und daß das eine Kabelende am Schloß, insbesondere Zylinderschloß (20; 120), drehbar gelagert ist.

4. Kabelschloß nach Anspruch 3, dadurch gekennzeichnet, daß die Kabelhülse (44; 144) mit dem Schloßgehäuse (16; 116) verklipst ist.

5. Kabelschloß nach einem der vorgehenden Ansprüche, dadurch gekennzeichnet, daß die Länge parallel zur Drehachse des aus dem Schloßgehäuse (16; 116) vorstehenden Teils der Kabelhülse (44; 144) im Bereich des 0,3- bis 1fachen, vorzugsweise des 0,4- bis 0,8fachen der entsprechenden Länge des Schloßgehäuses (16; 116) liegt.

6. Kabelschloß nach einem der vorgehenden Ansprüche, dadurch gekennzeichnet, daß die Kabelhülse (44) dem Verlauf des Kabelelements im spannungsfreien Zustand folgend gebogen ist.

7. Kabelschloß nach einem der Ansprüche 1 bis 5, dadurch gekennzeichnet, daß die Kabelhülse (144) im wesentlichen kegelstumpfförmig ist.

8. Kabelschloß nach einem der vorgehenden Ansprüche, dadurch gekennzeichnet, daß die Kabelhülse (44; 144) und das Kabelelement (12; 112) von gesonderten Teilen gebildet sind.

9. Kabelschloß nach einem der vorgehenden Ansprüche, dadurch gekennzeichnet, daß die Kabelhülse (44; 144) den Endabschnitt des Kabelelements (12; 112) im wesentlichen abdichtend umgreift.

10. Kabelschloß nach einem der vorgehenden Ansprüche, dadurch gekennzeichnet, daß das Schloßgehäuse (16; 116) zweiteilig ausgebildet ist mit einer zur Drehachse (34; 134) des Kabels (12; 112) im Schloßteil (14; 114) im wesentlichen parallelen Teilungsebene.

11. Kabelschloß nach einem der vorgehenden Ansprüche, dadurch gekennzeichnet, daß die Kabelhülse (44; 144) mit radial nach innen federnden Rasthaken (46; 146) versehen ist, die den Rand einer Kreisöffnung (48) des Schloßgehäuses (14; 114) hintergreifen.

12. Kabelschloß nach einem der vorgehenden Ansprüche, dadurch gekennzeichnet, daß es mit einem das Schloßgehäuse (14) umgreifenden Schloßhalter (50) zur Befestigung an einem Träger, insbesondere an einem Fahrradrahmen (58), versehen ist und daß der Schloßhalter (50) zur Fixierung des Schloßgehäuses mit einer mit der Aufnahmeöffnung (24) fluchtenden Durchstecköffnung (56) für den Schließkopf (22) versehen ist.

13. Kabelschloß nach einem der vorgehenden Ansprüche, dadurch gekennzeichnet, daß das Kabelelement (12) ein Spiralkabel ist.

14. Kabelschloß nach einem der vorhergehenden Ansprüche, dadurch gekennzeichnet,
daß das eine Kabelende an einem Zylindergehäuse (160) des Zylinderschlosses (120) drehbar, jedoch axial unverschiebbar, gelagert ist, welches Zylindergehäuse (160) sowohl eine Aufnahmeöffnung (124a) mit Verriegelungseinrichtung (Sperrstift 126) für den Schließkopf (122) aufweist als auch eine Drehlageröffnung für einen Schließzylinder (162).

15. Kabelschloß nach Anspruch 14, dadurch gekennzeichnet, daß im Schließzylinder (162) Schließplättchen (164) gelagert sind, denen Ausnehmungen (170, 172) im Zylindergehäuse (160) zugeordnet sind und die mit den Zähnen (168) eines Schlüssels (121) zusammenwirken.

## Claims

1. A cable lock, in particular for two-wheel vehicles, comprising
- a lock part (14;114.) with a lock housing (16;116) and a lock, in particular a cylinder lock (20;120), inside the lock housing (16;116),
- an elongate flexible cable element (12;112), one cable end of which is secured to the lock part (14;114) so as to be rotatable about the cable axis (34;134) and the other cable end of which is provided with a closing head (22;122) for the selective insertion in a receiving opening (24;124) of the lock part and locking in the receiving opening (24;124) by means of the lock,
characterised in
that the lock part (14;114) is provided with a cable sleeve (44;144) which embraces one end portion of the cable element (12;112) in the vicinity of the one cable end rotatably secured to the lock part (14;114) and which is mounted on the lock part (14;114) so as to be rotatable about the cable axis (34;134), wherein the outer periphery of the cable sleeve (44;144) merges substantially continuously into the outer periphery of the lock housing (16;116), and in that in a direction away from the lock housing (16;116) the cable sleeve (44;144) has a substantially continuously decreasing outer diameter.

2. A cable lock according to Claim 1, characterised in that in the vicinity of its end remote from the lock housing (16;116) the cable sleeve (44;144) extends gently tapering towards the cable element.

3. A cable lock according to Claim 1 or 2, characterised in that the cable sleeve (44;144) is rotatably mounted on the lock housing (16;116) and in that one cable end is rotatably mounted on the lock, in particular a cylinder lock (20;120).

4. A cable lock according to Claim 3, characterised in that the cable sleeve (44;144) is secured to the lock housing (16;116) by clips.

5. A cable lock according to any one of the preceding Claims, characterised in that the length parallel to the axis of rotation of the part of the cable sleeve (44;144) protruding from the lock housing (16;116) is in the range of 0.3 to 1 times, preferably 0.4 to 0.8 times the corresponding length of the lock housing (16;116).

6. A cable lock according to any one of the preceding Claims, characterised in that the cable sleeve (44) is curved to follow the path of the cable element in the unloaded state.

7. A cable lock according to any one of Claims 1 to 5, characterised in that the cable sleeve (144) is substantially frustoconical.

8. A cable lock according to any one of the preceding Claims, characterised in that the cable sleeve (44;144) and the cable element (12;112) are formed by separate parts.

9. A cable lock according to any one of the preceding Claims, characterised in that the cable sleeve (44;144) embraces the end portion of the cable element (12;112) in a substantially sealed manner.

10. A cable lock according to any one of the preceding Claims, characterised in that the lock housing (16;116) is formed in two parts with a plane of separation substantially parallel to the axis of the rotation (34;134) of the cable (12;112) in the lock part (14;114).

11. A cable lock according to any one of the preceding Claims, characterised in that the cable sleeve (44;144) is provided with radially inwardly resilient locating hooks (46;146) which engage behind the rim of a circular opening (48) in the lock housing (14;114).

12. A cable lock according to any one of the preceding Claims, characterised in that it is provided with a lock support (50) embracing the lock housing (14) for mounting on a carrier, in particular on a bicycle frame (58), and in that for securing the lock housing the lock support (50) is provided with a passage opening (56) for the closing head (22) in alignment with the receiving opening (24).

13. A cable lock according to any one of the preceding Claims, characterised in that the cable element (12) is a coiled cable.

14. A cable lock according to any one of the preceding Claims, characterised in that one cable end is mounted rotatably but axially non-displaceably on a cylinder housing (160) of the cylinder lock (120), which cylinder housing (160) has both a receiving opening (124a) with a locking means (catch pin 126) for the closing head (122) and a pivot bearing opening for a closing cylinder (162).

15. A cable lock according to Claim 14, characterised in that closing plates (164) are mounted in the closing cylinders (162), with which recesses (170,172) in the cylinder housing (160) are associated and which co-operate with the teeth (168) of a key (121).

## Revendications

1. Antivol à câble destiné, en particulier, à des véhicules à deux roues, comprenant
- un cadenas (14 ; 114) comportant un boîtier de cadenas (16 ; 116) et une serrure, en particulier une serrure cylindrique (20 ; 120), à l'intérieur du boîtier de cadenas (16 ; 116),
- un élément formant câble (12 ; 112) allongé, flexible, dont une extrémité est fixée, avec possibilité de rotation, sur le cadenas (14 ; 114), autour de l'axe du câble (34 ; 134) et dont l'autre extrémité est pourvue d'une tête de fermeture (22 ; 122), afin d'être insérée, lorsque cela est souhaité, dans une ouverture formant logement (24 ; 124) du cadenas, et d'être verrouillée dans l'ouverture formant logement (24 ; 124) au moyen de la serrure,
caractérisé en ce que
le cadenas (14 ; 114) est pourvu d'une gaine de câble (44 ; 144), qui entoure un tronçon terminal de l'élément formant câble (12 ; 112), dans la zone de l'une des extrémités de câble qui est fixée, avec possibilité de rotation, sur le cadenas (14 ; 114), et qui est montée tournante autour de l'axe du câble (34 ; 134), la périphérie externe de la gaine de câble (44 ; 144) se transformant de façon sensiblement continue en périphérie externe du boîtier de cadenas (16 ; 116), et en ce que la gaine de câble (44 ; 144), dans la direction opposée au boîtier de cadenas (16 ; 116), présente un diamètre extérieur se réduisant de façon sensiblement continue.

2. Antivol à câble selon la revendication 1, caractérisé en ce que la gaine de câble (44 ; 144), dans la zone de son extrémité orientée à l'opposé du boîtier de cadenas (16 ; 116), se termine, en direction de l'élément formant câble, par une forme plate.

3. Antivol selon la revendication 1 ou 2, caractérisé en ce que la gaine de câble (44 ; 144) est montée tournante sur le boîtier de cadenas (16 ; 116), et en ce que l'une des extrémités de câble est montée tournante sur la serrure, en particulier la serrure cylindrique (20 ; 120).

4. Antivol selon la revendication 3, caractérisé en ce que la gaine de câble (44 ; 144) est encliquetée sur le boîtier de cadenas (16 ; 116).

5. Antivol selon l'une des revendications précédentes, caractérisé en ce que la longueur, parallèlement à l'axe de rotation, de la partie de la gaine de câble (44 ; 144) qui dépasse du boîtier de cadenas (16 ; 116) est située dans une plage allant de 0,3 fois à 1 fois, de préférence de 0,4 fois à 0,8 fois la longueur correspondante du boîtier de cadenas (16 ; 116).

6. Antivol selon l'une des revendications précédentes, caractérisé en ce que la gaine de câble (44) est courbe, en suivant le tracé de l'élément formant câble lorsqu'il n'est pas sous tension.

7. Antivol selon l'une des revendications 1 à 5, caractérisé en ce que la gaine de câble (144) présente une forme sensiblement tronconique.

8. Antivol selon l'une des revendications précédentes, caractérisé en ce que la gaine de câble (44 ; 144) et l'élément formant câble (12 ; 112) sont constitués de composants séparés.

9. Antivol selon l'une des revendications précédentes, caractérisé en ce que la gaine de câble (44 ; 144) entoure, de façon sensiblement étanche, le tronçon terminal de l'élément formant câble (12 ; 112).

10. Antivol selon l'une des revendications précédentes, caractérisé en ce que le boîtier de cadenas (16 ; 116) est constitué de deux parties, avec un plan de division sensiblement parallèle à l'axe de rotation (34 ; 134) du câble (12 ; 112) dans le cadenas (14 ; 114).

11. Antivol selon l'une des revendications précédentes, caractérisé en ce que la gaine de câble (44 ; 144) est pourvue de crans d'encliquetage (46 ; 146), élastiques radialement vers l'intérieur, qui saisissent le bord d'une ouverture circulaire (48) du boîtier de cadenas (14 ; 114)

12. Antivol selon l'une des revendications précédentes, caractérisé en ce qu'il est pourvu d'une bride de cadenas (50) entourant le boîtier de cadenas (14), afin de permettre sa fixation sur un support, en particulier sur un cadre de bicyclette (58), et en ce que la bride (50), pour permettre la fixation du boîtier de cadenas, présente une ouverture d'introduction (56), destinée à la tête de fermeture (22), alignée avec l'ouverture formant logement (24).

13. Antivol selon l'une des revendications précédentes, caractérisé en ce que l'élément formant câble (12) est un câble en spirale.

14. Antivol selon l'une des revendications précédentes, caractérisé
en ce que l'une des extrémités de câble est montée tournante, mais non déplaçable axialement, sur un boîtier cylindrique (160) de la serrure cylindrique (120), boîtier cylindrique (160) qui présente une ouverture formant logement (124a), comportant un dispositif de verrouillage (goupille de blocage 126), pour la tête de fermeture (122), ainsi qu'une ouverture formant coussinet de pivotement destiné au cylindre de fermeture (162).

15. Antivol selon la revendication 14, caractérisé en ce sont montées, dans le cylindre de fermeture (162), des plaquettes de fermeture (164), auxquelles sont associés des évidements (170, 172) ménagés dans le boîtier cylindrique (160), et qui coopèrent avec les dents (168) d'une clé (121).
